Europäisches Patentamt

European Patent Office

Office européen des brevets

(19)

(11) Numéro de publication: **0 239 469**
**A1**

(12) **DEMANDE DE BREVET EUROPEEN**

(21) Numéro de dépôt: **87400581.2**

(22) Date de dépôt: **17.03.87**

(51) Int. Cl.⁴: **H 04 N 5/92**

(30) Priorité: **17.03.86 FR 8603768**

(43) Date de publication de la demande: **30.09.87**
**Bulletin 87/40**

(84) Etats contractants désignés: **AT BE CH DE ES FR GB IT LI LU NL SE**

(71) Demandeur: **NEW VIDEO PROCESS, Société Civile, 1bis rue Léon Marie Cesné, F-78200 Mantes-La-Jolie (FR)**

(72) Inventeur: **Dumont, Gérard, Résidence Belvédère, CH-1092 Belmont s/Lausanne (CH)**
Inventeur: **Tschan, Othmar, 18 Chemin de la Roche, CH-1020 Renens (CH)**

(74) Mandataire: **Epstein, Henri, 18 Résidence La Galliarderie, F-78590 Noisy-le-Roi (FR)**

(54) **Procédé cinématographique d'enregistrement et de lecture d'images et de sons par introduction de voies à bande passante étroite dans un signal vidéo.**

(57) Domaine d'enregistrement et de lecture de signaux vidéo accompagnés de signaux audio.

Pour l'introduction de signaux audio dans un signal vidéo, les signaux audio sont numérisés à l'aide d'une modulation CVSDM, multiplexés et mis en mémoire temporairement au rythme de l'acquisition. Les signaux binaires sont extraits d'une mémoire (M1, M2) de manière séquentielle, codés par codage Manchester et enregistrés sur la bande magnétique. D'un point de vue temporel, par rapport au signal vidéo composite, ces signaux codés se substituent au signal vidéo proprement dit et occupent des lignes non visualisées de la trame TV, telles que les lignes de début de trame.

A la lecture de l'enregistrement codé, on effectue les opérations inverses. Le procédé permet d'introduire un grand nombre, allant jusqu'à 32, de voies audio dans un signal vidéo à enregistrer sur une bande magnétique et d'extraire ces voies lors de la lecture de l'enregistrement vidéo.

EP 0 239 469 A1

Procédé cinématographique d'enregistrement et de lecture d'images et de sons par introduction de voies à bande passante étroite dans un signal vidéo.

La présente invention se rapporte à un procédé cinematographique d'enregistrement et de lecture d'images et de sons sur un support d'enregistrement, tel que cassette ou disque, par introduction de voies à bande passante étroite dans un signal vidéo à enregistrer et par extraction après lecture, ainsi qu'à un dispositif de mise en oeuvre de ce procédé.

Dans les techniques audio-visuelles faisant appel à des images enregistrées sur magnétoscope, lorsqu'on veut par exemple accompagner ces images de commentaires en plusieurs langues, on peut enregistrer ces commentaires sur un autre support et synchroniser l'enregistrement et la lecture des images et des commentaires, mais une telle solution est complexe et nécéssite un matériel important.

Pour éviter ces inconvénients, on peut introduire les différents signaux audio dans le signal vidéo, comme préconisé par exemple dans les brevets français n° 2 536 933 et 2 536 944 (Matsushita) ou dans un brevet Européen n° 0 062 783 (Licentia).

Cependant, les procédés révélés par ces documents ne permettent d'introduire dans l'enregistrement vidéo que deux canaux audio, ce qui peut être insuffisant dans beaucoup d'applications.

La présente invention a pour objet un procédé permettant, de façon simple, d'introduire un grand nombre de voies à bande passante étroite, telles que des voies audio, dans un signal vidéo à enregistrer, en particulier sur une bande magnétique, et d'extraire ces voies, de façon tout aussi simple, lors de la lecture de l'enregistrement vidéo.

La présente invention a également pour objet un dispositif de mise en oeuvre du procédé, dispositif permettant d'utiliser en particulier n'importe quelle cassette vidéo standard pour l'enregistrement, et d'effectuer la lecture de cette cassette sur n'importe quel magnétoscope existant du même standard et ce, grâce à des moyens simples et peu onéreux.

Selon l'invention, pour l'introduction de voies à bande passante étroite dans un signal vidéo, on multiplexe dans le temps toutes les voies numérisées, le cas échéant, on sérialise le signal multiplexé, on substitue le signal sérialisé à certaines lignes du signal vidéo et on enregistre de façon habituelle ces signaux mélangés, puis à la lecture d'enregistrement, on effectue les opérations inverses, de façon à pouvoir sélectionner à partir de $n$ signaux audio représentant $n$ langues différentes, des commentaires relatives aux mêmes images en une ou plusieurs langues séparées au choix des voies audio pour être disponibles à la lecture simultanément. La numérisation se fait de préférence par modulation CVSDM (Continuously Variable Slope Delta Modulation). Les signaux numérisés sont multiplexés et mis en mémoire temporairement, cela au rythme de l'acquisition. D'une manière séquentielle, les signaux binaires sont extraits de la mémoire, codés, avantageusement par codage Manchester, et enregistrés sur la bande magnétique. D'un point de vue temporel, par rapport au signal vidéo composite, ces signaux codés se substituent au signal vidéo proprement dit et occupent des lignes non visualisées de la trame TV que l'on sélectionne à l'avance.

Parmi ces lignes se trouvent les lignes de début de trame.

La distribution des lignes codées dans une demi-trame paire est différente de celle dans une demi-trame impaire. En procédant de cette manière, la présence d'un code sur une bande magnétisque n'entraine une diminution de la définition verticale que sur une petite fraction de l'image, par exemple sur les bords supérieur et inférieur de l'image.

A la lecture de l'enregistrement codé, on effectue les opérations inverses. Le dispositif conforme à l'invention comprend un codeur et un décodeur. Le codeur comporte $n$ modulateurs, par exemple CVSDM, suivis d'un multiplexeur, de deux zones mémoire, d'un codeur, tel qu'un codeur Manchester, et d'un dispositif de commutation. Le tout fonctionne sous contrôle d'une circuiterie logique séquentielle. Le décodeur comporte une circuiterie logique séquentielle, un dispositif de commutation, un décodeur, tel qu'un décodeur Manchester, deux zones mémoire, un démultiplexeur et, le cas échéant, $n$ convertisseurs numérique-analogiques, tels que des démodulateurs CVSDM.

La présente invention sera mieux comprise à la lumière de la description détaillée d'un mode de réalisation présenté à titre d'exemple non limitatif et illustré par les dessins annexes, dont

la figure 1 est un bloc-diagramme d'un codeur conforme à l'invention, et

la figure 2 est un bloc-diagramme d'un décodeur conforme à l'invention.

Dans la présente description, le terme "bande passante étroite" se rapporte à un signal dont la bande passante est inférieure d'au moins deux à trois ordres de grandeur à celle du signal vidéo. Ce signal peut par exemple être un signal de parole dont la bande passante peut être réduite, sans dommage pour son intelligibilité, à la valeur classique de 300-3400 Hz. Dans le présent exemple, le support d'enregistrement est une bande magnétique, mais ce peut être également un disque optique numérique et, dans ce cas, il faut, bien entendu, numériser le signal à enregistrer et convertir en signal analogique le signal numérique à la lecture du disque optique.

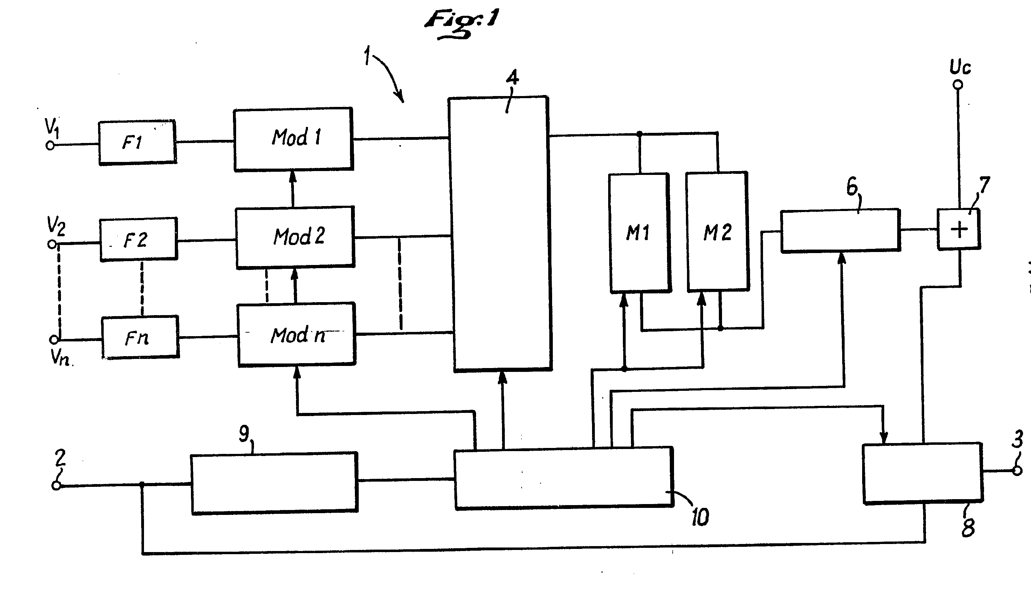

Le codeur 1 représenté à la figure 1 comporte $n$ entrées $V_1$ à $V_n$ recevant $n$ signaux audio, par exemple des commentaires en $n$ langues différentes relatifs aux mêmes images. Ce nombre $n$ est par exemple égal à 8, mais peut être différent de cette valeur.

Le codeur 1 comporte en outre une entrée 2 recevant un signal vidéo composite correspondant, pour l'exemple précité, à des images devant être accompagnées desdits commentaires. Le codeur 1 comporte aussi une sortie 3 que l'on relie à l'entrée d'enregistrement d'un magnétoscope classique (non représenté).

Chacune des voies $V_1$ à $V_n$ est reliée par un filtre correspondant $F_1$ à $F_n$ à un numériseur qui est un modulateur (CVSDM) $Mod_1$ à $Mod_n$ respectivement. Les filtres $F_1$ à $F_n$ sont des filtres passe-bas, dont la fréquence de coupure est par exemple de 3400 Hz.

La fréquence d'échantillonnage ou d'acquisition du modulateur (CVSDM) est alors par exemple de 32 kHz. Les sorties des modulateurs $Mod_1$ à $Mod_n$ sont reliées à un multiplexeur 4. La sortie de celui-ci est reliée à une mémoire tampon 5.

Dans l'exemple de réalisation présenté, la mémoire 5 comprend deux circuits de mémorisation $M_1$, $M_2$ branchés en parallèle et activés alternativement: quand l'un est en mode écriture, l'autre est en mode lecture et ce, par exemple, au rythme des demi-trames du signal vidéo.

Les données extraites de la zone mémoire sont dirigées vers un codeur de type Manchester 6. L'amplitude des impulsions délivrées par le codeur est ajustable par des moyens prévus à sa sortie et non représentés.

A ces impulsions est ajoutée une composante continue de 300 mV. La sortie de l'additionneur 7 est reliée à un dispositif de commutation à haute performance. La fonction de cet élément est de permuter d'une part le signal contenant le code, d'autre part le signal vidéo composite, et cela dans un ordre défini à l'avance.

La borne 2 est également reliée à un circuit d'extraction du signal de synchronisation 9 permettant d'extraire du signal vidéo composite, appliqué à la borne 2, les signaux de synchronisation de lignes et de trame. Le circuit est relié à un circuit séquenceur de commande en "gestion de système" 10. Le circuit élabore, de façon connue en soi, à partir des signaux de synchronisation TV, les signaux d'horloge nécessaires aux modulateurs (Mod$_1$ à Mod$_n$) et au multiplexeur 4, et les signaux de commande de lecture et d'écriture des mémoires (M$_1$ et M$_2$), ainsi que le pilotage du dispositif de commutation 8. Ce sous-ensemble 10 comporte également un circuit de détection de parité (trame TV) et un système de sélection des lignes TV. Ainsi les lignes TV des demi-trames paires ou impaires devant être codées sont sélectionnées à l'avance.

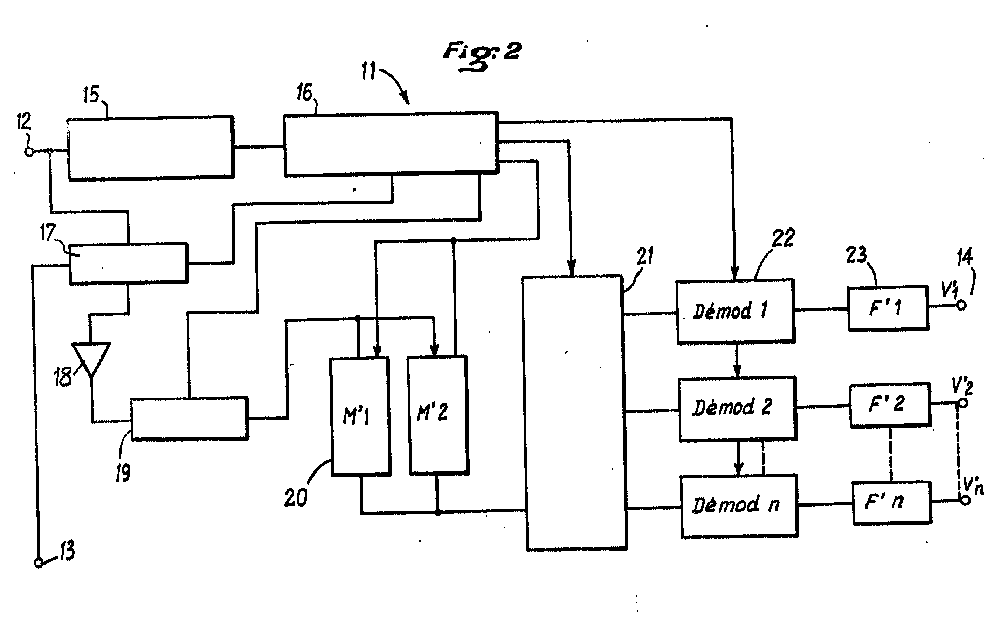

Le décodeur 11 représenté à la figure 2 comporte une entrée 12 recevant le signal disponible sur la borne "Sortie Vidéo" d'un magnétoscope avec lequel on lit une bande magnétique enregistrée grâce au codeur de la figure 1. L'entrée du décodeur 12 est reliée à un circuit de commutation 17. La fonction de celui-ci est de séparer les lignes TV supportant le signal vidéo proprement dit des lignes ne comportant que le code. Les premières sont dirigées directement vers la sortie vidéo du décodeur 13, tandis que les secondes sont dirigées vers le décodeur proprement dit par l'intermédaire d'un amplificateur 18. Le dispositif de commutation 17 est piloté par une circuiterie logique nommée "gestion de système" 16. Cette circuiterie est identique à celle que comporte le décodeur. Elle extrait du signal vidéo composite les informations qui lui sont nécessaires et cela par le moyen d'un circuit séparateur de synchro TV 15 relié lui-même à l'entrée du décodeur 12.

La sortie de l'amplificateur 18 est reliée à un décodeur Manchester 19 qui délivre les données devant être préservées en mémoire 20, ainsi que les impulsions d'horloge utilisées pour cette fonction. Dans l'exemple de réalisation de la figure 2, la mémoire comprend deux zones M$_1'$ et M$_2'$ reliées en parallèle et commandées alternativement comme les mémoires M$_1$ et M$_2$ du codeur.

La sortie des mémoires est reliée à un démultiplexeur 21. Les n sorties de celui-ci (n étant le même que pour le codeur) sont reliées à n convertisseurs numérique-analogique qui sont ici des démodulateurs -CVSDM- 22. Les démodulateurs (Démod$_1$ à Démod$_n$) sont respectivement suivis de n filtres F$_1'$ à F$_n'$ 23 sur les sorties V$_1'$ à V$_n'$, desquels on recueille les n voies audio 14 de départ.

Le dispositif décrit ci-dessus fonctionne de la manière suivante.

Les différentes voies audio, par exemple les commentaires en plusieurs langues d'une même image, sont échantillonnées individuellement par modulation CVSDM. Les signaux numériques en résultant sont multiplexés (4). le signal multiplexé est alternativement mémorisé dans les mémoires M$_1$ et M$_2$. La raison de cette alternance est que l'acquisition des données est faite en continu, tandis que leur transfert sur la bande magnétique doit des mémoires se fait à la fréquence des demi-trames d'un balayage TV (50 Hz). Ce qui implique que la capacité des mémoires doit être au moins égale au nombre de bits fournis par les modulateurs CVSDM durant 20 ms. Ensuite, les signaux lus alternativement dans $M_1$ et $M_2$ sont codés (Self Clocking Code). Une composante continue est ajoutée au code, afin que celui-ci ne perturbe pas la synchronisation vidéo.

Le signal de sortie du codeur est enregistré sur magnétoscope, comme s'il s'agissait d'un signal vidéo classique. Le code se substitue au signal vidéo proprement dit et cela sur les lignes des demi-trames TV sélectionnées.

A la lecture de la bande magnétique ainsi enregistrée, le signal engendré par les lignes TV comportant le code est dirigé vers le décodeur, où il va subir le traitement inverse de celui de codage, à savoir: séparation des informations "données" et "horloge", mémorisation temporaire, démultiplexage, démodulation CVSDM et filtrage.

Etant donné que l'on utilise durant le codage et le décodage les mêmes signaux de synchronisation affectés au même signal et que ces signaux de synchronisation commandent de la même façon des éléments correspondants (modulateur/démodulateur, comptage, adressage mémoire, etc.), on sépare correctement les voies audio à la lecture en correspondance avec la même image.

En conclusion, le dispositif selon l'invention (codeur et décodeur) fait appel à des moyens simples et peu onéreux, car ce sont des circuits intégrés courants, ne nécessite aucune modification des magnétoscopes utilisés, car il se branche simplement sur les entrées et sorties de ces magnétoscopes, et permet d'introduire un grand nombre de voies audio, allant par exemple jusqu'à 32, si l'on utilise des circuits de téléphone numériques.

## REVENDICATIONS.

1. Procédé cinématographique d'enregistrement et de lecture d'images et de sons sur un support d'enregistrement, tel que cassette ou disque, par introduction de voies à bande passante étroite dans un signal vidéo à enregistrer et par extraction après lecture, caractérisé par le fait qu'il consiste à multiplexer dans le temps toutes les voies, numérisées le cas échéant, à sérialiser le signal multiplexé, à substituer le signal sérialisé à certaines lignes du signal vidéo et à enregistrer de façon habituelle ces signaux mélangés, puis, à la lecture de l'enregistrement, à effectuer les opérations inverses, de façon à pouvoir sélectionner à partir de $n$ signaux audio représentant $n$ langues différentes, des commentaires relatives aux mêmes images en une ou plusieurs langues séparées au choix des voies audio pour être disponibles à la lecture simultanément.

2. Procédé selon la revendication 1, caractérisé par le fait que lesdites certaines lignes du signal vidéo sont des lignes visualisées, telles que des lignes de début de trames.

3. Procédé selon la revendication 1 ou 2 pour l'introduction de signaux audio, caractérisé par le fait que la numérisation se fait par modulation CVSDM (Continuously Variable Slope Delta Modulation).

4. Procédé selon la revendication 1 ou 2, caractérisé en ce qu'on mémorise temporairement le signal multiplexé et le signal démultiplexé dans une mémoire tampon comportant deux circuits de mémoire, dans lesquels on enregistrre et on lit les données alternativement.

5. Procédé selon la revendication 4, caractérisé en ce que la lecture et l'inscription des mémoires sont faites au rythme du balayage des demi-trames du signal vidéo.

6. Procédé selon l'une des revendications 1 à 5, caractérisé en ce qu'on utilise en tant que signaux d'horloge pour la mémorisation, le multiplexage, la sérialisation et pour les opérations inverses correspondantes des signaux élaborées à partir des signaux de synchronisation du signal vidéo.

7. Procédé selon l'une des revendications 1 à 6, caractérisé en ce qu' après la sérialisation du signal multiplexé on lui ajoute une composante continue.

8. Dispositif d'introduction de voies à bande passante étroite dans un signal vidéo à enregistrer et d'extraction après lecture, caractérisé en ce qu'il comprend un codeur (1) et un décodeur (11), le codeur comportant un multiplexeur (4) précédé, le cas échéant, de convertisseurs

analogique/numérique (Mod$_1$ à Mod$_n$), un convertisseur parallèle/série (6) et un circuit de commutation (8) et le décodeur comportant un circuit de commutation (17), un convertisseur série/parallèle (19), un démultiplexeur (21) et, le cas échéant, des convertisseurs numérique/ analogique (Démod$_1$ à Démod$_n$).

9. Dispositif selon la revendication 8, caractérisé en ce qu'il comprend en aval du multiplexeur et en amont du démultiplexeur une mémoire tampon (5,20).

10. Dispositif selon la revendication 8 ou 9, caractérisé en ce qu'il comporte en aval du convertisseur parallèle/série du codeur un additionneur de composante continue (7).

11. Dispositif selon la revendication 8 ou 9, caractérisé en ce que le codeur et le décodeur comportent un circuit d'extraction de signaux de synchronisation (9,15) relié à un circuit séquenceur (10,16) fournissant les signaux d'horloge nécessaires aux éléments du codeur et du décodeur respectivement.

*Fig:1*

Fig. 2

2/2

0239469

0239469

Office européen
des brevets

**RAPPORT DE RECHERCHE EUROPEENNE**

Numero de la demande

EP  87 40 0581

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | PATENT ABSTRACTS OF JAPAN, vol. 8, no. 185 (E-262)[1622], 24 août 1984; & JP-A-59 75 783 (PIONEER K.K.) 28-04-1984; & US-A-4 602 295 (MORIYAMA et al.) (Date de publication: 22-07-1986) * Colonne 3, ligne 60 - colonne 6, ligne 13; colonne 6, lignes 44-64 * | 1,2,4-11 | H 04 N   5/92 |
| A | Idem | 3 | |
| | --- | | |
| Y | IEEE TRANSACTIONS ON CONSUMER ELECTRONICS, vol. CE-30, no. 4, novembre 1984, pages 581-591, IEEE, New York, US; H. MIYAGUCHI et al.: "PCM audio IC's for 8 mm video" * Page 581, colonne de droite, lignes 1-18; page 582, colonne de gauche, ligne 7 - colonne de droite, ligne 20; page 583, en entier * | 1,2,4-11 | |
| | | | **DOMAINES TECHNIQUES RECHERCHES (Int. Cl.4)** |
| | | | H 04 N |
| | ---      -/- | | |

Le présent rapport de recherche a été établi pour toutes les revendications

| Lieu de la recherche | Date d'achèvement de la recherche | Examinateur |
|---|---|---|
| LA HAYE | 25-06-1987 | VERSCHELDEN J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

0239469

**Office européen des brevets**

## RAPPORT DE RECHERCHE EUROPEENNE

Numéro de la demande

EP 87 40 0581

| | DOCUMENTS CONSIDERES COMME PERTINENTS | | Page 2 |

| Catégorie | Citation du document avec indication, en cas de besoin, des parties pertinentes | Revendication concernée | CLASSEMENT DE LA DEMANDE (Int. Cl.4) |
|---|---|---|---|
| A | FERNSEH- UND KINO-TECHNIK, vol. 37, no. 6, juin 193, pages 251-259, Berlin, DE; D. WESTERKAMP et al.: "Digitale Magnetbandaufzeichnung von Video- und Audio-Signalen auf einem Videocassettenrecorder" * Page 258, paragraphes 4.1, 4.2, en entier * | 1 | |
| | --- | | |
| Y | IEEE TRANSACTIONS ON CONSUMER ELECTRONICS, vol. CE-30, no. 3, août 1984, pages 230-235, IEEE, New York, US; Y. MORIYAMA et al.: "An optical video disc system for retrieving digital data and reproducing still picture with sound" * Pages 232-234, en entier * | 1,2,8 | |
| | --- | | DOMAINES TECHNIQUES RECHERCHES (Int. Cl.4) |
| A | US-A-4 295 154 (HATA et al.) * Colonne 5, ligne 8 - colonne 6, ligne 33 * | 3 | |
| | --- | | |
| A | FERNSEH- UND KINO-TECHNIK; vol. 38, no. 7, juillet 1984, pages 281-286, Berlin, DE; J. HEITMANN: "Digitale Videoaufzeichnung; Grundlagen . Standardisierung . Entwicklung" | | |
| | ----- | | |

Le présent rapport de recherche a été établi pour toutes les revendications

| Lieu de la recherche | Date d'achèvement de la recherche | Examinateur |
|---|---|---|
| LA HAYE | 25-06-1987 | VERSCHELDEN J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82